# EUROPÄISCHE PATENTSCHRIFT

(11) **EP 2 562 685 B1**
(45) Veröffentlichungstag und Bekanntmachung des Hinweises auf die Patenterteilung: **20.02.2019**
(21) Anmeldenummer: 12173982.5
(22) Anmeldetag: 28.06.2012
(51) Int. Cl.: G06K 9/00

(54) **Verfahren und Vorrichtung zur Klassifizierung eines sich in einem Vorfeld eines Fahrzeugs befindlichen Lichtobjekts**
Method and device for classifying a light object located in front of a vehicle
Procédé et dispositif de classification d'un objet lumineux situé à l'avant d'un véhicule

(30) Priorität: 23.08.2011 DE 102011081425
(43) Veröffentlichungstag der Anmeldung: 27.02.2013
(73) Patentinhaber: ROBERT BOSCH GMBH, 70442 Stuttgart (DE)
(72) Erfinder: Schwarzenberg, Gregor, 75365 Calw (DE)

(56) Entgegenhaltungen:
- DE-A1-102006 055 904
- SIMON D. MCLOUGHLIN ET AL: "Classification of road sign type using mobile stereo vision", PROCEEDINGS OF SPIE, 1. Juni 2005 (2005-06-01), Seiten 133-142, XP055047932, ISSN: 0277-786X, DOI: 10.1117/12.604824

## Beschreibung

### Stand der Technik

Die vorliegende Erfindung bezieht sich auf ein Verfahren und eine Vorrichtung zur Klassifizierung eines sich in einem Vorfeld eines Fahrzeugs befindlichen Lichtobjekts sowie auf ein entsprechendes Computerprogrammprodukt.

Von einer Kamera eines Fahrzeugs kann ein Umfeld des Fahrzeugs überwacht werden. Bilder der Kamera können von einer Bildauswertung ausgewertet werden, um für ein Fahrassistenzsystem benötigte Informationen zu erhalten. Solche Informationen können Daten über sich im Umfeld des Fahrzeugs befindliche Fremdfahrzeuge umfassen.

Das Dokument DE 102 54 806 B4 zeigt ein Verfahren zur Informationsverarbeitung von wenigstens zwei Informationsquellen in einem Kraftfahrzeug.

Das Dokument SIMON D. MCLOUGHLIN ET AL: "Classification of road sign type using mobile stereo vision". PROCEEDINGS OF SPIE. 1. Juni 2005 (2005-06-01). Seiten 133-142. ISSN: 0277-786X. 001: 10.1117/12.604824 befasst sich mit einem Verfahren zur Klassifizierung eines sich in einem Vorfeld eines Fahrzeugs befindlichen Lichtobjekts. Dazu wird ein Verlauf einer Helligkeit des Lichtobjekts über die Entfernung zu dem Lichtobjekt betrachtet. Je nach Verlauf kann das Lichtobjekt als lokales beleuchtetes Zeichen, als zurück reflektierendes Zeichen oder als diffus reflektierendes Zeichen klassifiziert werden.

Das Dokument DE 10 2006 055 904 A1 befasst sich mit einem Verfahren zur Erkennung und Kategorisierung von Lichtpunkten für ein Fahrzeug mit einem in die Fahrzeugumgebung ausgerichteten Kamerasensor. Es ist dabei zumindest eine erste Kategorie für ruhende angestrahlte Reflektoren und zumindest eine zweite Kategorie für selbststrahlende bewegte Lichter, insbesondere Fahrzeuglichter, vorgesehen. Dazu wird der zeitliche Verlauf der Intensität eines Lichtpunkts analysiert. Anhand der Intensitätsschwankung werden Lichtpunkte als Fahrzeuglichter bzw. als Reflektor kategorisiert.

### Offenbarung der Erfindung

Vor diesem Hintergrund wird mit der vorliegenden Erfindung ein Verfahren und eine Vorrichtung zur Klassifizierung eines sich in einem Vorfeld eines Fahrzeugs befindlichen Lichtobjekts sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

In einem Vorfeld eines bewegten Fahrzeugs befindliche Objekte weisen aus Sicht eines Fahrers des Fahrzeugs unterschiedliche Helligkeitsverläufe über die Zeit auf, je nachdem ob es sich um selbstleuchtende oder reflektierende Objekte handelt. Die unterschiedlichen Helligkeitsverläufe können auch auf Bildern einer Fahrzeugkamera erkannt werden, die die in dem Vorfeld des Fahrzeugs befindlichen Objekte detektiert. Durch einen Vergleich eines einem aktuell erkannten Objekt zugeordneten Helligkeitsverlauf mit einem bekannten charakteristischen Helligkeitsverlauf, der beispielsweise einer Annäherung an ein reflektierendes Objekt zugeordnet ist, kann bestimmt werden, ob es sich bei dem aktuell erkannten Objekt um ein selbstleuchtendes oder um ein reflektierendes Objekt handelt.

Dies ermöglicht eine Erkennung von Reflektoren über die Korrelation eines aktuellen Helligkeitsverlaufs mit einer approximierten Beleuchtungsverteilung. Die approximierte Beleuchtungsverteilung kann sich dabei auf eine durch einen Scheinwerfer des Fahrzeugs hervorgerufene Beleuchtung der Reflektoren beziehen.

Der beschriebene Ansatz kann für automatische Fernlichtregelungssysteme eingesetzt werden. Für solche Systeme ist es notwendig, erkannte Lichtobjekte in relevante Lichtobjekte, die beispielsweise einem Fremdverkehr zugeordnet werden können, und nicht relevante Objekte, wie Reflektoren, zu trennen. Um eine Unterscheidung zwischen selbstleuchtenden und reflektierenden Objekten durchzuführen sowie eine Erkennung oder Plausibilisierung von Fremdverkehr bzw. Reflektoren zu ermöglichen, kann unter anderem die Beleuchtungscharakteristik des Ego-Fahrzeuges verwendet werden.

Durch die Verwendung einer vereinfachten oder approximierten Beleuchtungscharakteristik ist eine effiziente Methode gegeben, um robust Reflektoren zu klassifizieren. Die Approximation vereinfacht die Anpassung an unterschiedliche Scheinwerferarten. Es ist daher nicht erforderlich eine aufwendige Messung der Beleuchtungscharakteristik durchzuführen. Dadurch kann auch der Speicherbedarf für die Charakteristik gering gehalten werden.

Über die Wahl eines variablen Zeitbereichs für die Reflektorklassifikation kann die Leistungsfähigkeit des Gesamtsystems einfach eingestellt oder appliziert werden. Der variable Zeitbereich kann eine Zeitdauer angeben, während der Bilder eines Leuchtobjekts erfasst werden, um das Leuchtobjekt zu klassifizieren.

Durch den beschriebenen Ansatz können insbesondere gepulste Lichtquellen, beispielsweise von LED-Rücklichtern oder neuartigen Frontscheinwerfersystemen, schnell detektiert werden, da sie Helligkeitsschwankungen aufweisen, die sich stark von dem eines Reflektors unterscheiden. Bei einer Korrelation eines einer gepulsten Lichtquelle zugeordneten Helligkeitsverlaufs mit einem einem Reflektor zugeordneten charakteristischen Helligkeitsverlauf ergeben sich im Vergleich zu der Annahme eines Reflektors anstelle der gepulsten Lichtquelle starke Abweichungen in der Korrelation.

Die vorliegende Erfindung schafft ein Verfahren zur Klassifizierung eines sich in einem Vorfeld eines Fahrzeugs befindlichen Lichtobjekts, wobei das Verfahren die folgenden Schritte umfasst:
Bestimmen eines dem Lichtobjekt zugeordneten Helligkeitsverlaufs über zumindest zwei das Lichtobjekt zu unterschiedlichen Zeiten abbildenden Bildern; und
Kombinieren des Helligkeitsverlaufs mit einem charakteristischen Helligkeitsverlauf, um das Lichtobjekt zu klassifizieren.

Bei dem Fahrzeug kann es sich beispielsweise um einen Personenkraftwagen oder einen Lastkraftwagen handeln. Das Fahrzeug kann sich auf einer Straße bewegen, während das Verfahren ausgeführt wird. Das Lichtobjekt kann in Fahrtrichtung vor dem Fahrzeug angeordnet sein. Das Lichtobjekt kann sich in einem von einem Scheinwerfer des Fahrzeugs ausgeleuchteten Bereich befinden. Das Lichtobjekt kann ein lichtaussendendes Objekt sein, das auf einem Bild, beispielsweise einer Kamera des Fahrzeugs, erkennbar ist. In dem Bild kann das Objekt als ein, einen oder mehrere Bildpunkte umfassender, und im Vergleich zum Umfeld, heller Bereich dargestellt sein. Zwischen einem Zeitpunkt einer Aufnahme eines ersten und eines weiteren der zumindest zwei Bilder kann sich ein Abstand zwischen dem Fahrzeug und dem Lichtobjekt verändern. Handelt es sich bei dem Lichtobjekt um einen Reflektor, so kann sich durch eine Veränderung des Abstands ein Reflexionswinkel zwischen einem von dem Scheinwerfer an das Lichtobjekt ausgestrahlten Lichtstrahl und einem von dem Reflektor an das Fahrzeug reflektierten Lichtstrahl ändern. Dies kann zu einer scheinbaren Helligkeitsänderung des Lichtobjekts zwischen den Zeitpunkten der Aufnahmen von zwei oder mehr Bildern führen. Die Helligkeitsänderung kann durch Auswertung der Bilder erkannt und als Helligkeitsverlauf dargestellt werden. Der Helligkeitsverlauf kann über die Zeit, über eine zurückgelegte Wegstrecke oder über eine Entfernungsänderung zwischen dem Fahrzeug und dem Lichtobjekt aufgetragene Werte für die Helligkeit des Lichtobjekts umfassen. Im Schritt des Kombinierens kann ein aktuell ermittelter Helligkeitsverlauf, der einem in den Bildern abgebildeten realen Objekt zugeordnet ist, mit einem gespeicherten Helligkeitsverlauf, dem charakteristischen Helligkeitsverlauf, verglichen werden. Stimmen der aktuell ermittelte Helligkeitsverlauf und der charakteristische Helligkeitsverlauf zumindest näherungsweise oder innerhalb bestimmter Toleranzbereiche überein, so kann davon ausgegangen werden, dass es sich bei dem Lichtobjekt, das den aktuell ermittelten Helligkeitsverlauf hervorgerufen hat, um ein Objekt handelt, dass hinsichtlich seiner Lichtaussendung ähnliche Eigenschaften aufweist, wie ein dem charakteristischen Helligkeitsverlauf zugeordnetes Objekt. Ist der charakteristische Helligkeitsverlauf beispielsweise einem reflektierenden Objekt zugeordnet, so kann durch Ausführung des Verfahrens das in den Bildern abgebildete Lichtobjekt als ein selbstleuchtendes oder als ein reflektierendes Objekt klassifiziert werden. Umso mehr Bilder pro Zeitintervall ausgewertet werden und umso größer das Zeitintervall ist, umso genauer kann die Klassifizierung durchgeführt werden. Dabei kann die Anzahl der Bilder pro Zeitintervall als auch eine Länge des Zeitintervalls fest vorgegeben oder einstellbar sein. Ist eine Einstellbarkeit gegeben, so kann diese beispielsweise abhängig von einer Geschwindigkeit des Fahrzeugs sein. Auch kann das Zeitintervall solange verlängert werden, bis eine durchgeführte Klassifizierung des Lichtobjekts ein plausibles Ergebnis liefert, oder das Lichtobjekt einen Erfassungsbereich der Kamera verlassen hat.

Das Verfahren kann einen Schritt des Auswählens des charakteristischen Helligkeitsverlaufs abhängig von einer aktuellen Beleuchtungscharakteristik eines das Vorfeld des Fahrzeugs ausleuchtenden Scheinwerfers des Fahrzeugs umfassen. Bei dem Scheinwerfer kann es sich um einen von zwei Frontscheinwerfern des Fahrzeugs handeln. Die Beleuchtungscharakteristik kann von einem Betriebszustand des Scheinwerfers und zusätzlich oder alternativ von einem Typ des Scheinwerfers abhängig sein. Die Beleuchtungscharakteristik kann sich auf eine von dem Scheinwerfer ausgestrahlte Lichtmenge und Lichtverteilung beziehen. Eine Information über die Beleuchtungscharakteristik kann über eine Schnittstelle von einem Steuergerät zur Ansteuerung des Scheinwerfers empfangen werden.

Durch die Berücksichtigung der Beleuchtungscharakteristik kann ein realer Helligkeitsverlauf sehr exakt durch den charakteristischen Helligkeitsverlauf abgebildet werden.

Im Schritt des Bestimmens können eine erste Helligkeit des Lichtobjekts in einem ersten das Lichtobjekt abbildenden Bild und zumindest eine zweite Helligkeit des Lichtobjekts in zumindest einem zweiten das Lichtobjekt abbildenden Bild bestimmt werden. Der Helligkeitsverlauf kann aus der ersten Helligkeit und zumindest einer zweiten Helligkeit bestimmt werden. Werden mehr als zwei Bilder ausgewertet, so kann der Helligkeitsverlauf aus den entsprechenden Helligkeiten des Lichtobjekts in den jeweiligen Bildern bestimmt werden. Umso mehr Bilder ausgewertet werden, umso genauer lässt sich der Helligkeitsverlauf darstellen.

Dabei kann im Schritt des Bestimmens der Helligkeitsverlauf als eine Änderung zwischen der ersten Helligkeit und zumindest der zweiten Helligkeit bestimmt werden. Somit kann der Helligkeitsverlauf aus einem Unterschied zwischen den zumindest zwei in den unterschiedlichen Bildern bestimmten Helligkeiten bestimmt werden. Auf diese Weise kann der Helligkeitsverlauf sehr einfach bestimmt werden. Auch kann das Kombinieren mit dem charakteristischen Helligkeitsverlauf mit einer einfach zu realisierenden Verknüpfungsvorschrift durchgeführt werden.

Im Schritt des Bestimmens kann der Helligkeitsverlauf über eine Anzahl von innerhalb einer vorgebbaren Zeitspanne erfassten und das Lichtobjekt abbildenden Bildern bestimmt werden. Die Bilder können in bestimmten zeitlichen Abständen von der Kamera des Fahrzeugs erfasst werden. Auch können die zeitlichen Abstände verkürzt werden, wenn in einem Bild ein Lichtobjekt erkannt wird, dass klassifiziert werden soll. Die Zeitspanne kann so gewählt sein, dass innerhalb der Zeitspanne aufgenommene Bilder erfahrungsgemäß zur Klassifizierung des Lichtobjekts ausreichen. Auch kann die Zeitspanne so lang gewählt werden, wie das Lichtobjekt in den Bildern zu erkennen ist oder bis das Lichtobjekt eindeutig klassifiziert ist. Schritte des Verfahrens können bereits ausgeführt werden, während die Zeitspanne noch andauert und somit weitere Bilder erfasst werden, die als Grundlage zur Klassifizierung des Lichtobjekts dienen.

Somit können die Schritte des Bestimmens und Kombinierens fortlaufend durchgeführt werden, bis das Lichtobjekt klassifiziert ist. Auf diese Weise kann zum einen eine Klassifizierung mit einer hohen Genauigkeit durchgeführt werden. Anderseits kann eine Ausführung des Verfahrens beendet werden, sobald eine erfolgreiche Klassifizierung durchgeführt wurde. Dadurch kann zur Klassifizierung erforderlicher Rechenaufwand auf das unbedingt erforderliche Maß reduziert werden.

Gemäß einer Ausführungsform kann im Schritt des Kombinierens der Helligkeitsverlauf mit einem für ein reflektierendes Lichtobjekt charakteristischen Helligkeitsverlauf kombiniert werden, um das abgebildete Lichtobjekt als reflektierendes oder selbst leuchtendes Lichtobjekt zu klassifizieren. Der charakteristische Helligkeitsverlauf kann einmalig gemessen werden. Auch kann der charakteristische Helligkeitsverlauf unter Kenntnis des Reflexionsverhaltens eines reflektierenden Lichtobjekts berechnet oder geschätzt werden. Unabhängig von der Art der Bestimmung des charakteristischen Helligkeitsverlaufs kann dieser zur Verwendung durch das Verfahren gespeichert werden.

Beispielsweise kann im Schritt des Kombinierens eine Korrelation zwischen dem Helligkeitsverlauf und dem charakteristischen Helligkeitsverlauf durchgeführt werden. Die Korrelation liefert ein gut auswertbares Ergebnis, das anzeigt, ob die Helligkeitsverläufe identisch sind, einander ähneln oder stark voneinander abweichen. Abhängig von dem Ergebnis kann das Lichtobjekt klassifiziert werden. Anstelle einer Korrelation kann ein anderes geeignetes Verfahren zum Vergleich der Helligkeitsverläufe durchgeführt werden.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1 und 2: Darstellungen eines Fahrzeugs;
- Fig. 3 und 4: Darstellungen von Bildern einer Fahrzeugkamera;
- Fig. 5: ein Blockschaltbild eines Ausführungsbeispiels der vorliegenden Erfindung; und
- Fig. 6: ein Ablaufdiagramm eines Ausführungsbeispiels der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

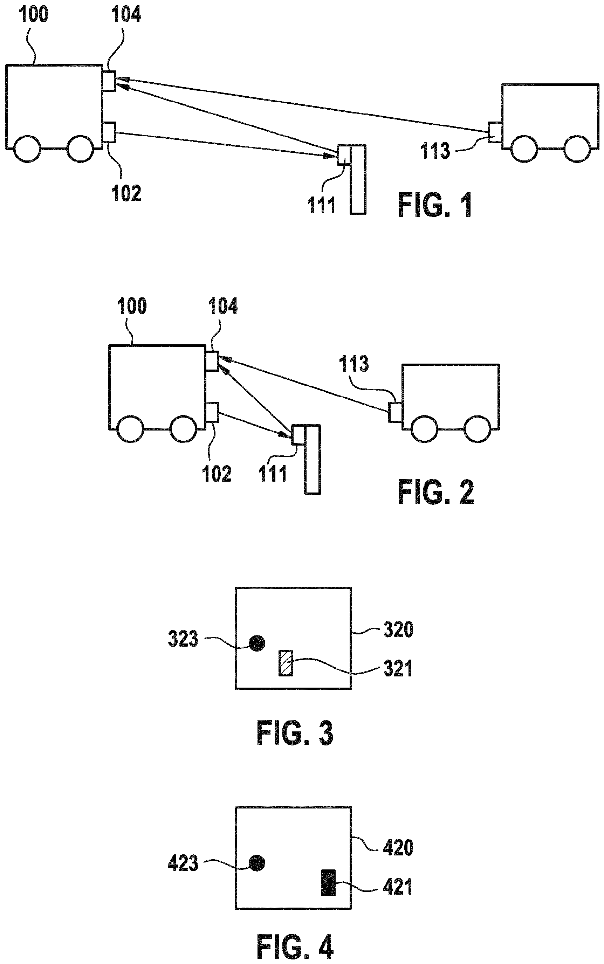

Fig. 1 zeigt eine Darstellung eines Fahrzeugs 100 gemäß einem Ausführungsbeispiel der vorliegenden Erfindung. Das Fahrzeug 100 weist einen Scheinwerfer 102 und ein Kamera 104 auf. Der Scheinwerfer 102 ist ausgebildet, um im Betrieb ein Vorfeld des Fahrzeugs 100 auszuleuchten. Die Kamera 104 ist ausgebildet, um zeitlich aufeinanderfolgende Bilder zu erzeugen, die jeweils das Vorfeld des Fahrzeugs 100 abbilden.

Im Vorfeld des Fahrzeugs 100 befinden sich Objekte, hier ein Seitenpfosten mit einem Reflektor 111 und ein entgegenkommendes Fahrzeug mit einer Beleuchtung 113. Das Fahrzeug 100 bewegt sich mit einer Geschwindigkeit auf den Reflektor und die aktuelle Position des entgegenkommenden Fahrzeugs zu.

Die Beleuchtung 113 des entgegenkommenden Fahrzeugs ist ein selbstleuchtendes Lichtobjekt, beispielsweise ein Scheinwerfer. Beispielhaft ist in Fig. 1 ein von der Beleuchtung 113 ausgestrahlter Lichtstrahl gezeigt, der von einem Bildaufnehmer der Kamera 104 erfasst wird. Eine Intensität des von dem Bildaufnehmer erfassten ausgestrahlten Lichtstrahls ist abhängig von einer Leuchtstärke der Beleuchtung 113 und einem Abstand sowie einem Winkel zwischen der Beleuchtung 113 und der Kamera 104.

Der Reflektor 111 ist nicht selbstleuchtend, sondern ist ausgebildet, um einfallende Lichtstrahlen zu reflektieren. Beispielhaft ist in Fig. 1 ein von dem Scheinwerfer 102 ausgestrahlter Lichtstrahl gezeigt, der auf den Reflektor 111 trifft, von dem Reflektor 111 reflektiert wird und als reflektierter Lichtstrahl von dem Bildaufnehmer der Kamera 104 erfasst wird. Eine Intensität des von dem Bildaufnehmer erfassten reflektierten Lichtstrahls ist abhängig von einer Beleuchtungscharakteristik des Scheinwerfers 102, einem Abstand sowie einem Winkel zwischen dem Scheinwerfer 102 und dem Reflektor 111, einer Reflektionscharakteristik des Reflektors sowie einem durch Positionen des Scheinwerfers 102, der Kamera 104 und des Reflektors 111 bestimmten Reflektionswinkel des von dem Scheinwerfer 102 ausgestrahlten und an dem Reflektor 111 reflektierten Lichtstrahls.

Fig. 2 zeigt eine weitere Darstellung des in Fig. 1 gezeigten Fahrzeugs 100, gemäß einem Ausführungsbeispiel der vorliegenden Erfindung. Das Fahrzeug 100 ist zu einem, im Vergleich zu Fig. 1, späteren Zeitpunkt gezeigt. Aufgrund der Geschwindigkeit des Fahrzeugs 100 hat sich das Fahrzeug 100 an den Reflektor 111 die Beleuchtung 113 des entgegenkommenden Fahrzeugs angenähert. Dadurch hat sich insbesondere der durch die Positionen des Scheinwerfers 102, der Kamera 104 und des Reflektors 111 bestimmten Reflektionswinkel des von dem Scheinwerfer 102 ausgestrahlten und an dem Reflektor 111 reflektierten Lichtstrahls geändert. Daher scheint der Reflektor 111 im Vergleich zu der in Fig. 1 gezeigten Situation eine andere Helligkeit aufzuweisen.

Fig. 3 zeigt eine schematische Darstellung eines von einer Fahrzeugkamera aufgenommenen Bildes 320 gemäß einem Ausführungsbeispiel der vorliegenden Erfindung. Dabei kann es sich um ein von der in Fig. 1 gezeigten Kamera aufgenommenes Bild zu der in Fig. 1 gezeigten Situation handeln. Auf dem Bild 320 ist ein Abbild 321 des in Fig. 1 gezeigten Reflektors und ein Abbild 323 der in Fig. 1 gezeigten Beleuchtung des entgegenkommenden Fahrzeugs zu erkennen. Die Abbilder 321, 323 können mittels einer geeigneten Bildauswertung des Bildes 320 erkannt werden. Das Abbild 321 des Reflektors weist im Vergleich zu dem Abbild 323 der Beleuchtung eine geringere Helligkeit auf. Werte der den Abbildern 321, 323 zugeordneten Helligkeiten können erfasst und ausgewertet werden.

Fig. 4 zeigt eine schematische Darstellung eines von einer Fahrzeugkamera aufgenommenen Bildes 420 gemäß einem Ausführungsbeispiel der vorliegenden Erfindung. Dabei kann es sich um ein von der in Fig. 2 gezeigten Kamera aufgenommenes Bild zu der in Fig. 2 gezeigten Situation handeln. Auf dem Bild 420 ist ein weiteres Abbild 421 des in den Figuren 1 und 2 gezeigten Reflektors und ein weiteres Abbild 423 der in den Figuren 1 und 2 gezeigten Beleuchtung zu erkennen. Die Abbilder 421, 423 können mittels einer geeigneten Bildauswertung des Bildes 420 erkannt werden. Das Abbild 421 des Reflektors weist im Vergleich zu dem Abbild 423 der Beleuchtung eine ähnliche Helligkeit auf. Werte der den Abbildern 421, 423 zugeordneten Helligkeiten können erfasst und ausgewertet werden.

Die in den Figuren 3 und 4 gezeigten Bilder 320, 420 sind zu unterschiedlichen Zeitpunkten aufgenommen worden. Die Helligkeit der Abbilder 323, 423 der Beleuchtung ist in den Bildern 320, 420 in etwa gleich geblieben. Somit zeigen die Abbilder 323, 423 der Beleuchtung über die Bilder 320, 420 einen nahezu konstanten Helligkeitsverlauf auf.

Die Helligkeit der Abbilder 321, 421 des Reflektors hat sich in den Bildern 320, 420 stark geändert. In diesem Fall hat eine Helligkeit des Abbilds 421 im Vergleich zu der Helligkeit des Abbilds 421 zugenommen. Somit zeigen die Abbilder 321, 421 des Reflektors über die Bilder 320, 420 einen sich verändernden, hier ansteigenden, Helligkeitsverlauf auf.

Somit ist ein Unterschied in den Helligkeitsverläufen der Abbilder 321, 421 des Reflektors und der Abbilder 323, 423 der Beleuchtung zu erkennen. Durch einen Vergleich des Helligkeitsverlaufs der Abbilder 321, 421 des Reflektors mit einem charakteristischen Helligkeitsverlauf, beispielsweise eines charakteristischen Reflektors, können die Abbilder 321, 421 als Abbilder eines Reflektors klassifiziert werden. Entsprechend dazu kann durch einen Vergleich des Helligkeitsverlaufs der Abbilder 323, 423 der Beleuchtung mit einem charakteristischen Helligkeitsverlauf, beispielsweise wiederum eines charakteristischen Reflektors, die Abbilder 323, 423 als keine Abbilder eines Reflektors und somit als Abbilder eines selbstleuchtenden Lichtobjekts, wie einer Beleuchtung, klassifiziert werden. Alternativ kann der Vergleich mit einem charakteristischen Helligkeitsverlauf eines charakteristischen selbstleuchtenden Lichtobjekts durchgeführt werden.

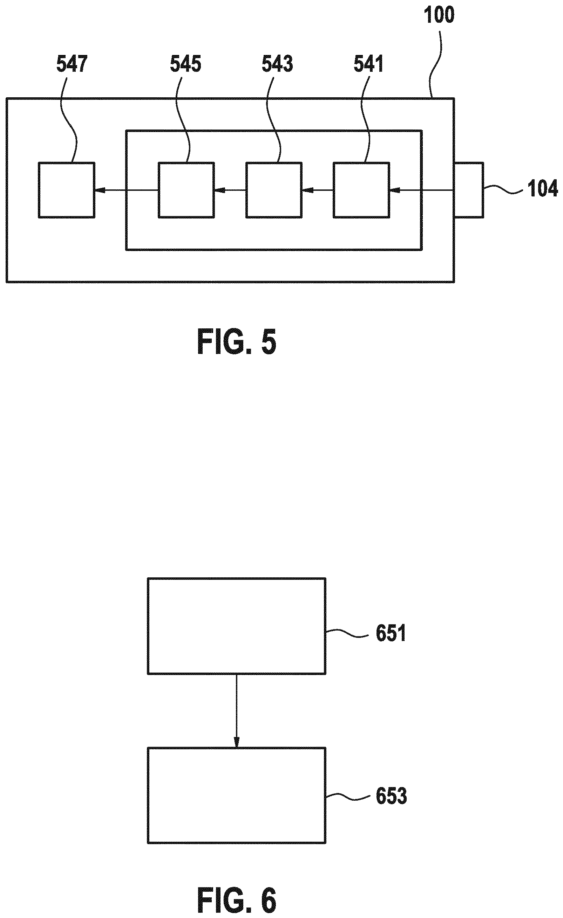

Fig. 5 zeigt ein Fahrzeug 100 mit einer Vorrichtung zur Klassifizierung eines sich in einem Vorfeld des Fahrzeugs 100 befindlichen Lichtobjekts, gemäß einem Ausführungsbeispiel der vorliegenden Erfindung. Bei dem Fahrzeug 100 kann es sich um das anhand von Fig. 1 beschriebene Fahrzeug handeln. Das Fahrzeug 100 weist eine Kamera 104 auf, die ausgebildet ist, um ein Bild, beispielsweise das in Fig. 3 gezeigte Bild, des Vorfelds des Fahrzeugs 100 zu erzeugen und mit oder ohne Vorverarbeitung an die Vorrichtung zur Klassifizierung bereitzustellen.

Die Vorrichtung zur Klassifizierung weist eine Bestimmungseinrichtung 541, eine Kombinationseinrichtung 543 und eine Klassifizierungseinrichtung 545 auf. Die Vorrichtung zur Klassifizierung ist ausgebildet, um basierend auf von der Kamera 104 bereitgestellten Bildern ein in den Bildern abgebildetes Lichtobjekt zu klassifizieren und eine Information über die durch die Klassifizierung bestimmte Art des Lichtobjekts auszugeben. Die Information über das Lichtobjekt und die Art des Lichtobjekts kann beispielsweise von einem Assistenzsystem 547 des Fahrzeugs 100 verwendet werden. Bei dem Assistenzsystem 547 kann es sich beispielsweise um ein automatisches Fernlichtregelungssystem handeln.

Die Bestimmungseinrichtung 541 der Vorrichtung zur Klassifizierung ist ausgebildet, um eine Abfolge von Bildern oder Bildausschnitten von Bildern zu empfangen, die von der Kamera 104 aufgenommen worden sind. Die Bestimmungseinrichtung 541 ist ausgebildet, um ein oder mehrere Lichtobjekte in der Abfolge von Bildern zu erkennen oder eine Information über ein oder mehrere in der Abfolge von Bildern abgebildeten Lichtobjekten zu empfangen. Ferner ist die Bestimmungseinrichtung 541 ausgebildet, um für jedes Lichtobjekt in jedem Bild einen Helligkeitswert zu bestimmen und aus der Abfolge von Helligkeitswerten pro Lichtobjekt für jedes Lichtobjekt einen Helligkeitsverlauf zu bestimmen. Die Bestimmungseinrichtung 541 ist ausgebildet, um für jedes Lichtobjekt eine Information über einen Helligkeitsverlauf auszugeben. Dabei kann die Bestimmungseinrichtung 541 ausgebildet sein, um den Helligkeitsverlauf nach einer vorbestimmten Anzahl von ausgewerteten Bildern, in denen ein bestimmtes Objekt abgebildet ist, auszugeben. Alternativ kann die Bestimmungseinrichtung 541 ausgebildet sein, um bereits durch die Auswertung einer geringen Anzahl von Bildern, z. B. von zwei Bildern, einen Helligkeitsverlauf zu bestimmen und auszugeben und ausgebildet sein, um nach Auswertung jedes weiteren Bildes, in dem das Lichtobjekt zu erkennen ist, den Helligkeitsverlauf zu aktualisieren und als aktualisierten Helligkeitsverlauf auszugeben. Die Bestimmungseinrichtung 541 kann ausgebildet sein, um den Helligkeitsverlauf mit einer Zeitskala oder einer Wegskala zu versehen oder zu normieren. Beispielsweise kann dem Helligkeitsverlauf eine Wegstrecke zugeordnet sein, die das Fahrzeug während der Aufnahme der dem Helligkeitsverlauf zugrundeliegenden Bilder zurückgelegt hat oder um die sich das Fahrzeug während der Aufnahme der dem Helligkeitsverlauf zugrundeliegenden Bilder dem Lichtobjekt angenähert hat. Auf diese Weise können unterschiedliche Fahrzeuggeschwindigkeiten oder unterschiedliche Relativgeschwindigkeiten zwischen dem Fahrzeug und dem Lichtobjekt bei der Bestimmung des Helligkeitsverlaufs berücksichtigt werden.

Die Kombinationseinrichtung 543 ist ausgebildet, um den oder die Helligkeitsverläufe von der Bestimmungseinrichtung 541 zu empfangen und jeweils mit einem charakteristischen Helligkeitsverlauf zu kombinieren. Um die Helligkeitsverläufe zu kombinieren kann die Kombinationseinrichtung 543 einen Korrelator aufweisen, der ausgebildet ist, um Werte des aktuellen Helligkeitsverlaufs mit Werten des charakteristischen Helligkeitsverlaufs zu korrelieren. Die Kombinationseinrichtung 543 ist ferner ausgebildet, um ein Ergebnis der Kombination aus den Helligkeitsverläufen bereitzustellen. Basierend auf dem Ergebnis kann das Lichtobjekt klassifiziert werden. Die Kombinationseinrichtung 543 kann ausgebildet sein, um den charakteristischen Helligkeitsverlauf über eine Schnittstelle zu empfangen, aus einem Speicher auszulesen oder basierend auf aktuellen Parametern eines Scheinwerfers des Fahrzeugs zu bestimmen.

Gemäß diesem Ausführungsbeispiel erfolgt die Klassifizierung des oder der Lichtobjekte in einer Klassifizierungseinrichtung 545. Die Klassifizierungseinrichtung 545 ist ausgebildet, um jedes von der Kombinationseinrichtung 543 bereitgestellte Ergebnis auszuwerten, um jeweils die Art des Lichtobjekts zu bestimmen. Dazu kann die Klassifizierungseinrichtung 555 ausgebildet sein, um ein Ergebnis mit einem Schwellwert zu vergleichen. Unterschreitet das Ergebnis den Schwellwert, so kann dies beispielsweise bedeuten, dass das Lichtobjekt ein reflektierendes Objekt ist. Überschreitet das Ergebnis den Schwellwert, so kann dies bedeuten, dass das Lichtobjekt ein selbstleuchtendes Objekt ist. Wird ein Helligkeitsverlauf von der Kombinationseinrichtung 543 mit mehreren unterschiedlichen charakteristischen Helligkeitsverläufen kombiniert, und somit pro Helligkeitsverlauf mehrere Ergebnisse erzeugt, so kann die von der Klassifizierungseinrichtung 555 durchgeführte Klassifizierung basierend auf den mehreren Ergebnissen verfeinert werden.

Fig. 6 zeigt ein Ablaufdiagramm eines Verfahrens zur Klassifizierung eines sich in einem Vorfeld des Fahrzeugs 100 befindlichen Lichtobjekts, gemäß einem Ausführungsbeispiel der vorliegenden Erfindung. Das Verfahren kann beispielsweise von der in Fig. 5 gezeigten Vorrichtung ausgeführt werden. In einem Schritt 651 wird ein einem Lichtobjekt zugeordneter Helligkeitsverlauf über zumindest zwei das Lichtobjekt zu unterschiedlichen Zeiten abbildenden Bildern bestimmt. In einem Schritt 653 wird der Helligkeitsverlauf mit einem charakteristischen Helligkeitsverlauf kombiniert, um das Lichtobjekt zu klassifizieren. Das Verfahren kann beispielsweise immer dann ausgeführt werden, wenn ein Scheinwerfer des Fahrzeugs aktiv Licht aussendet und somit sich im Einflussbereich des Scheinwerfers befindliche Reflektoren das Licht des Scheinwerfers reflektieren können.

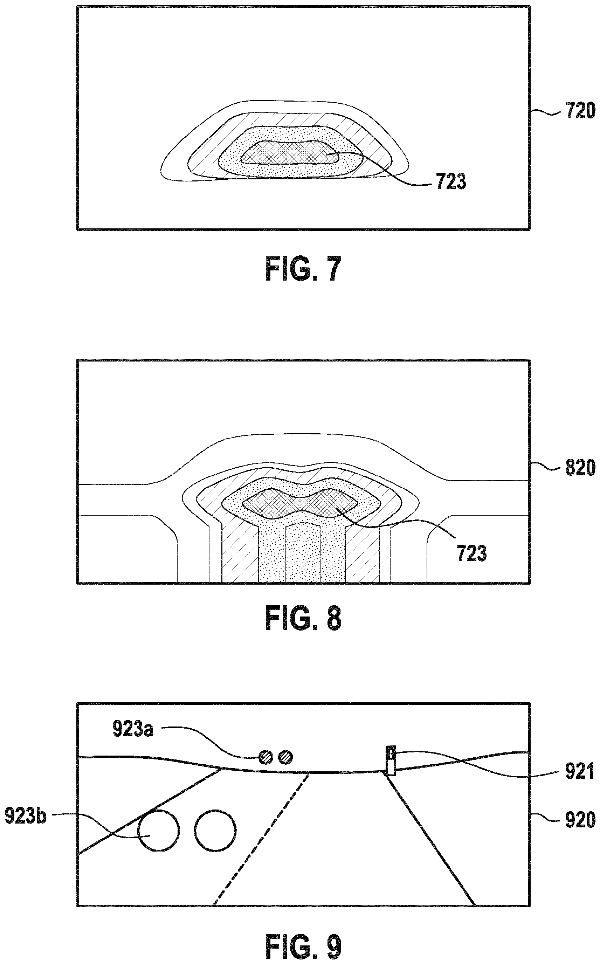

Fig. 7 zeigt eine gemessene Beleuchtungskarte 720 gemäß einem Ausführungsbeispiel der vorliegenden Erfindung. Die Beleuchtungskarte 720 stellt eine Helligkeitsverteilung des eigenen Fernlichts 723 in einem definierten Abstand dar. Die Beleuchtungskarte kann aus einem Abbild der Beleuchtung einer weißen Wand resultieren. Weiter außen liegende blaue Flächen stellen eine geringe Ausleuchtung dar, zentrale rote Flächen stellen dagegen eine starke Ausleuchtung dar.

Die Beleuchtungskarte 720 kann auf einem von einer Fahrzeugkamera aufgenommenen Bild basieren Zu erkennen sind zwei annähernd ovale Flächen mit sehr großer Helligkeit. Diese beiden Flächen sind gemeinsam von ringförmigen Bereichen abnehmender Helligkeit umgeben. Die Werte der Beleuchtungskarte können auf das Maximum normiert werden, um relative Helligkeitsänderungen zwischen zwei Punkten auf der Beleuchtungskarte auszulesen. Jeder Punkt in der Beleuchtungskarte entspricht einem Sichtstrahl mit definiertem horizontalem und vertikalem Winkel bezogen auf die Blickrichtung (optische Achse) der verbauten Kamera.

Alternativ kann jeweils eine Approximation der Beleuchtungskarten 720 durchgeführt werden, und es kann ein Helligkeitsverlauf der das Fernlicht abbildenden Bereiche der approximierten Beleuchtungskarten bestimmt werden.

Fig. 8 zeigt eine Approximation 820 der in Fig. 7 gezeigten gemessenen Beleuchtungskarte gemäß einem Ausführungsbeispiel der vorliegenden Erfindung. Die approximierte Beleuchtungskarte 820 wird aus der gemessenen Beleuchtungskarte durch eine Approximation über zwei 1D-Funktionen bestimmt. Die approximierte Beleuchtungskarte 820 stellt wiederum eine Helligkeitsverteilung des Fernlichts 723 in einem definierten Abstand dar.

Fig. 9 zeigt ein von einer Fahrzeugkamera aufgenommenen Bild 920 gemäß einem Ausführungsbeispiel der vorliegenden Erfindung. Dabei kann es sich um ein von der in Fig. 1 gezeigten Kamera aufgenommenes Bild handeln, bei der sich das Fahrzeug auf einer Fahrspur auf einen am rechten Fahrbahnrand angeordneten Reflektor 921 zubewegt. Auf der Gegenspur kommen dem Fahrzeug zwei Fahrzeuge entgegen, deren Scheinwerfer 923a, 923b auf dem Bild 920 jeweils als kreisförmige Bereiche zu erkennen sind. Die Scheinwerfer 923a des weiter entfernten Fahrzeugs werden in dem Bild 920 kleiner und mit einer geringeren Helligkeit als die Scheinwerfer 923b des näheren Fahrzeugs dargestellt. Unter der Annahme, dass es sich bei den Scheinwerfer 923a, 923b um Scheinwerfer mit der gleichen Lichtcharakteristik handelt, kann aus dem Bild 920 indirekt eine Änderung der Helligkeit eines sich annähernden Scheinwerfers entnommen werden. Je näher sich ein Scheinwerfer 923a, 923b an der das Bild 920 aufnehmenden Kamera befindet, umso größer wird die Helligkeit.

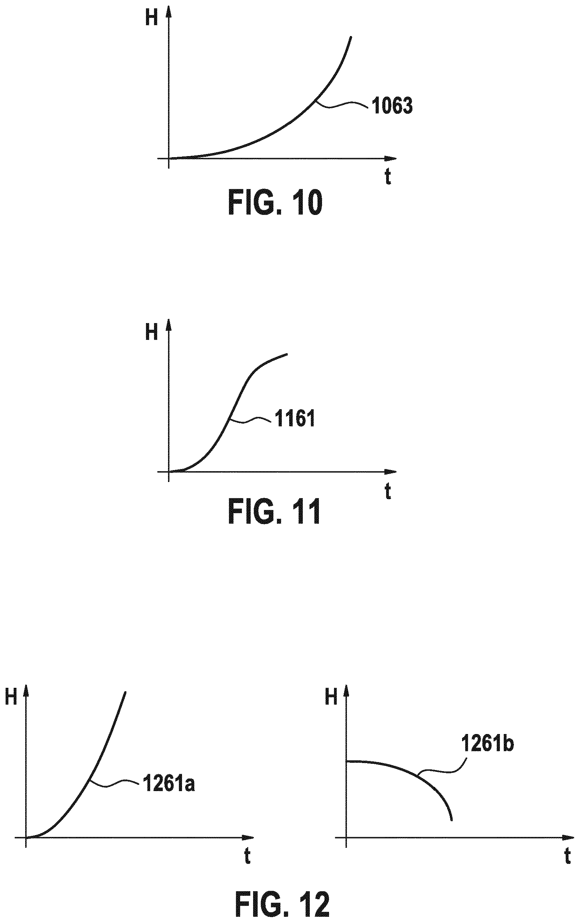

Fig. 10 zeigt einen Helligkeitsverlauf 1063 eines selbstleuchtenden Objekts, gemäß einem Ausführungsbeispiel der vorliegenden Erfindung. Bei dem selbstleuchtenden Objekt handelt es sich hier um ein Fahrzeug, oder genauer gesagt, um die Scheinwerfer des Fahrzeugs. Somit kann der Helligkeitsverlauf 1063 beispielsweise eine Änderung der Helligkeit der in Fig. 9 gezeigten Scheinwerfer 923b über die Zeit darstellen. In Fig. 10 ist die Zeit t auf der Abszisse und die Helligkeit H auf der Ordinate aufgetragen. Der Helligkeitsverlauf 1063 kann basierend auf einer Mehrzahl von Bildern bestimmt werden, die die in Fig. 9 gezeigte Situation zu unterschiedlichen Zeitpunkten darstellen. Für jeden Zeitpunkt eines Bildes oder einer Approximation eines Bildes kann der dem Scheinwerfer oder den Scheinwerfern zugeordnete Helligkeitswert aus dem Bild bestimmt und in das in Fig. 10 gezeigte Diagramm eingetragen werden, um den Helligkeitsverlauf 1063 zu bestimmen.

Der Helligkeitsverlauf 1063 repräsentiert einen charakteristischen Helligkeitsverlauf eines lichtaussendenden Objekts, gemäß einem Ausführungsbeispiel der vorliegenden Erfindung. Gemäß diesem Ausführungsbeispiel weist der charakteristische Helligkeitsverlauf des lichtaussendenden Objekts zum Zeitpunkt Null eine nicht vorhandene Helligkeit auf, die mit der Zeit zunächst langsamer und schließlich immer schneller zunimmt. Der charakteristische Helligkeitsverlauf des lichtaussendenden Objekts kann durch einen Halbast einer Parabel dargestellt werden.

Fig. 11 zeigt einen Helligkeitsverlauf 1161 eines reflektierenden Objekts, gemäß einem Ausführungsbeispiel der vorliegenden Erfindung. Bei dem reflektierenden Objekt handelt es sich hier um einen Reflektor. Somit kann der Helligkeitsverlauf 1161 beispielsweise eine Änderung der Helligkeit des in Fig. 9 gezeigten Reflektors 321 über die Zeit darstellen. In Fig. 11 ist die Zeit t auf der Abszisse und die Helligkeit H auf der Ordinate aufgetragen. Der Helligkeitsverlauf 1161 kann basierend auf einer Mehrzahl von Bildern bestimmt werden, die die in Fig. 9 gezeigte Situation zu unterschiedlichen Zeitpunkten darstellen. Für jeden Zeitpunkt eines Bildes oder einer Approximation eines Bildes kann der dem Reflektor zugeordnete Helligkeitswert aus dem Bild bestimmt und in das in Fig. 11 gezeigte Diagramm eingetragen werden, um den Helligkeitsverlauf 1161 zu bestimmen.

Der Helligkeitsverlauf 1161 repräsentiert einen charakteristischen Helligkeitsverlauf eines lichtreflektierenden Objekts, gemäß einem Ausführungsbeispiel der vorliegenden Erfindung. Gemäß diesem Ausführungsbeispiel weist der charakteristische Helligkeitsverlauf des lichtreflektierenden Objekts zum Zeitpunkt Null eine nicht vorhandene Helligkeit auf, die mit der Zeit zunächst langsam, dann immer schneller und schließlich wieder langsamer zunimmt.

Der Helligkeitsverlauf 1161 ergibt sich aus einer Verknüpfung einer Helligkeitsänderung, die sich aus einer Annäherung an den Reflektor ergibt, und aus einer Helligkeitsänderung, die sich aus der Beleuchtungskarte ergibt. Eine entsprechende Verknüpfung ist in Fig. 12 gezeigt.

Fig. 12 zeigt im linken Diagramm eine Helligkeitsänderung 1261a aus einer Annäherung an den Reflektor und im rechten Diagramm eine Helligkeitsänderung 1261b aus der Beleuchtungskarte. Auf der Abszisse ist jeweils die Zeit t und auf der Ordinate die Helligkeit H aufgetragen. Die Verknüpfung der Helligkeitsänderungen 1261a, 1261b kann durch eine Multiplikation erfolgen.

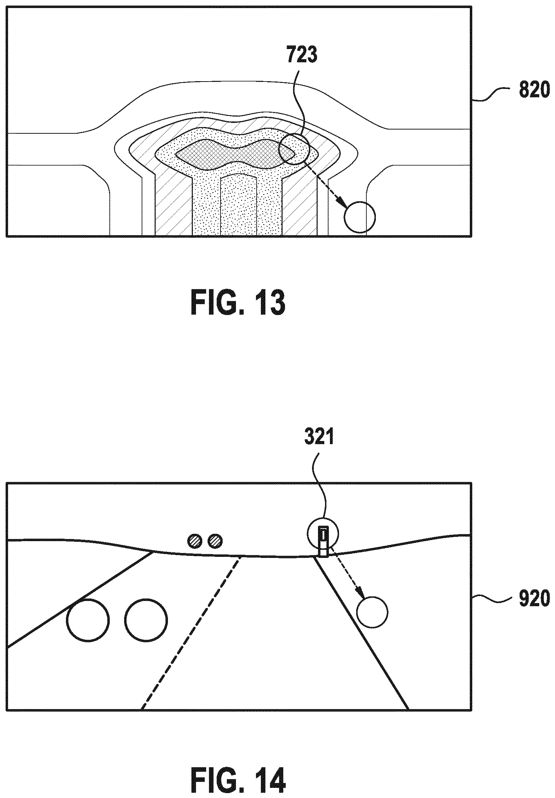

Fig. 13 zeigt die bereits in Fig. 8 gezeigte approximierte Beleuchtungskarte 820, wobei schematisch das Auslesen von normierten Beleuchtungswerten an zwei Positionen dargestellt ist, gemäß einem Ausführungsbeispiel der vorliegenden Erfindung. Die beiden Positionen, dargestellt als zwei Kreise, ergeben sich aus Aufnahmen eines Lichtobjektes zu unterschiedlichen Zeitpunkten. Zu den zwei unterschiedlichen Zeitpunkten kann jeweils an den entsprechenden Positionen deren normierte Helligkeit der Beleuchtung aus der Beleuchtungskarte ausgelesen werden und zur Bestimmung des Helligkeitsverlaufs 1261b verwendet werden.

Fig. 14 zeigt schematisch eine Bewegung mehrerer Lichtobjekte im Bild, gemäß einem Ausführungsbeispiel der vorliegenden Erfindung. Die Bewegung stellt eine Bewegung des Reflektors 321 relativ zu der Kamera dar, die eine Bildfolge der Situation aufnimmt. Durch zwei Kreise sind unterschiedliche Positionen des Reflektors 321 zu zwei unterschiedlichen Zeitpunkten dargestellt. Der Reflektor 321 bewegt sich dabei nach rechts unten, wie durch einen Pfeil dargestellt. Zu den zwei unterschiedlichen Zeitpunkten kann jeweils an den entsprechenden Positionen die Helligkeit des Reflektors 321 aus der Beleuchtungskarte ausgelesen werden und zur Bestimmung des Helligkeitsverlaufs, wie er beispielsweise in Fig. 12, 1261b dargestellt ist, verwendet werden. Die Bewegung des Reflektors 321 im Bild kann aus der Beleuchtungskarte 920 ausgelesen werden, beispielsweise mit Hilfe einer geeigneten Bildauswertung.

Anhand der Figuren 1 bis 14 wird im Folgenden ein Ausführungsbeispiel der vorliegenden Erfindung näher erläutert.

Für eine stabilere Erkennung von Reflektoren wird über einen variablen Zeitbereich, von 2 bis N Bildern, der Helligkeitsverlauf des Lichtobjektes 111, 113 mit dem angenommenen Helligkeitsverlauf eines Reflektors 111 verglichen. Dabei ist nicht die absolute Beleuchtung von Interesse, sondern die Art der Helligkeitsänderung wie auch deren Änderungsrate über die Zeit. Durch eine Korrelation dieser beiden Helligkeitsverläufe, einmal der gemessene Helligkeitsverlauf und einmal der Helligkeitsverlauf unter Annahme eines Reflektors 111, kann eine Klassifikation in Reflektor 111 sowie selbstleuchtendes Objekt 113 durchgeführt werden. Je länger der Zeitbereich gewählt wird, d.h. umso größer der Abstand zwischen den zeitlich am weitesten auseinanderliegenden und für ein Lichtobjekt ausgewerteten Bildern ist, desto sicherer wird die Klassifikation.

Für die Bestimmung eines angenommenen Helligkeitsverlaufs eines Reflektors 111 ist die aktuelle Beleuchtungscharakteristik notwendig wie auch deren Parameter. Die Parameter können beispielsweise das Fernlicht an/aus, die GLW-Stufen oder den Schaltstatus von Matrixbeam-Segmenten betreffen. GLW steht dabei für "gleitende Leuchtweite". Damit ist es möglich, die Scheinwerferausleuchtung in definierten Stufen vom Abblendlicht bis zum Vollfernlicht einzustellen, so dass entsprechenden Distanzen vor dem Fahrzeug (z.B. 50 m bis 200 m) ausgeleuchtet werden können. Wie bereits beschrieben ist dabei nicht die reale Beleuchtungsstärke von Interesse, sondern lediglich die Beleuchtungsänderung von Bildpunkt zu Bildpunkt, d.h. eine normalisierte Beleuchtungskarte ist genügend.

Diese Beleuchtungskarte kann approximiert werden, wie z.B. bei Halogen-Fernlicht über zwei Gaußglocken oder bei variablen Scheinwerfersysteme, wie GLW, MDF (maskiertes Dauerfernlicht), Matrixbeam, über parametrisierbare Funktionen. Beispielsweise zeigt Fig. 7 eine Beleuchtungskarte 720 und Fig. 8 eine approximierte Beleuchtungskarte 820.

Diese Beleuchtungskarte kann vorgegeben sein. Alternativ kann die Karte anhand von Reflektoren selbsttätig aufgebaut werden, über eine Klassifikation der Lichtobjekte als Reflektoren und einer Eintragung der Helligkeitsänderungen entlang der Reflektortrajektorie in die Beleuchtungskarte.

Wie aus den Figuren 10 bis 12 ersichtlich, definiert sich der Helligkeitsverlauf 1161 eines Reflektors im Gegensatz zu dem Helligkeitsverlauf 1063 eines selbstleuchtenden Objekts aus zwei Komponenten 1261a, 1261b. Zum einen beeinflusst die Annäherung an den Reflektor das Ausmaß der Helligkeit. Dies ergibt sich daraus, dass das Licht für jeden Meter zurückgelegte Strecke zum Reflektor zwei Meter weniger zurücklegen muss. Zum anderen wird das Ausmaß der Helligkeit bedingt durch die Annäherung veränderte Beleuchtung des Reflektors (anderer Winkel) basierend auf der Beleuchtungscharakteristik der verbauten Scheinwerfer beeinflusst.

Für die Klassifikation eines Lichtobjektes 111, 113 ist es zunächst notwendig dieses über mehrere Bilder 220, 320 hinweg zu verfolgen. Dadurch ist es möglich den Helligkeitsverlauf pro Lichtobjekt 111, 113 zu speichern, also über eine gewisse Historie, und diesen Helligkeitsverlauf mit dem erwarteten Helligkeitsverlauf für einen Reflektor 111, über die gespeicherte, approximierte Beleuchtungscharakteristik, zu vergleichen.

Dafür kann entweder laufend, von Bild 220 zu Bild 320, oder über eine bestimmte Historie, beispielsweise eine Anzahl von N Bildern oder einer zurückgelegten Strecke von M Metern des Ego-Fahrzeuges, der Abgleich mit der Reflektorannahme durchgeführt werden.

Die Helligkeit des ersten Auftretens des Lichtobjektes kann mit den Helligkeiten der darauffolgenden Messungen dieses Objektes prozentual verrechnet werden und entsprechend in der Beleuchtungskarte dieselbe prozentuale Auswertung erfolgen. Unter Berücksichtigung der möglichen Annäherung an den Reflektor können dabei Tendenzen ausgewertet werden, die die Klassifikation des Lichtobjektes als selbstleuchtendes bzw. reflektierendes Objekt ermöglicht.

Für den Abgleich mit der Reflektorannahme kann z.B. der Helligkeitsunterschied DeltaPhi_{objekt}, der einer Differenz oder einem prozentualen Unterschied der Helligkeitswerte zwischen Anfangs- und Endpunkt in der Historie der Bilder 220, 320 entspricht, mit DeltaPhi_{Beleuchtungschar.}aus der approximierten Beleuchtungscharakteristik verglichen werden, die einer Differenz oder einem prozentualem Unterschied in der Helligkeitswerte zwischen Anfangsposition des Objektes in der Beleuchtungskarte und der Endposition entspricht. Passen diese Unterschiede unter Berücksichtung der zurückgelegten Strecke des Ego-Fahrzeuges zusammen, ist also die Korrelation hoch genug, so kann ein entsprechender Wert gesetzt oder Zähler verändert werden, die in eine nachgelagerte Reflektor-Klassifkation münden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können Verfahrensschritte wiederholt sowie in einer anderen als in der beschriebenen Reihenfolge ausgeführt werden.

## Patentansprüche

1. Verfahren zur Klassifizierung eines sich in einem Vorfeld eines Fahrzeugs (100) befindlichen Lichtobjekts (111, 113), wobei das Verfahren die folgenden Schritte umfasst:
Bestimmen (651) eines dem Lichtobjekt (111, 113) zugeordneten Helligkeitsverlaufs (1161; 1063) über zumindest zwei das Lichtobjekt zu unterschiedlichen Zeiten abbildenden Bildern (320; 420; 920), wobei der Helligkeitsverlauf (1161; 1063) einem prozentualen Unterschied der Helligkeitswerte der Bilder (320; 420; 920) entspricht und Normieren des Helligkeitsverlaufs (1161; 1063) mit einer Wegskala, wobei dem Helligkeitsverlauf (1161; 1063) eine Wegstrecke zugeordnet ist, die das Fahrzeug (100) während der Aufnahme der dem Helligkeitsverlauf (1161; 1063) zugrunde liegenden Bildern (320; 420; 920) zurückgelegt hat; und
Kombinieren (653) des Helligkeitsverlaufs mit einem für ein reflektierendes Lichtobjekt (111, 113) charakteristischen Helligkeitsverlauf, um das Lichtobjekt als reflektierendes oder selbst leuchtendes Lichtobjekt zu klassifizieren.

2. Verfahren gemäß Anspruch 1, mit einem Schritt des Auswählens des charakteristischen Helligkeitsverlaufs abhängig von einer aktuellen Beleuchtungscharakteristik eines das Vorfeld des Fahrzeugs (100) ausleuchtenden Scheinwerfers (102) des Fahrzeugs.

3. Verfahren gemäß einem der vorangegangenen Ansprüche, bei dem im Schritt des Bestimmens eine erste Helligkeit des Lichtobjekts (111, 113) in einem ersten das Lichtobjekt abbildenden Bild (320) und zumindest eine zweite Helligkeit des Lichtobjekts in zumindest einem zweiten das Lichtobjekt abbildenden Bild (420) bestimmt werden und der Helligkeitsverlauf aus der ersten Helligkeit und der zumindest einen zweiten Helligkeit bestimmt wird.

4. Verfahren gemäß Anspruch 3, bei dem im Schritt des Bestimmens der Helligkeitsverlauf (1161; 1063) als eine Änderung zwischen der ersten Helligkeit und der zumindest einen zweiten Helligkeit bestimmt wird.

5. Verfahren gemäß einem der vorangegangenen Ansprüche, bei dem im Schritt des Bestimmens der Helligkeitsverlauf über eine Anzahl von innerhalb einer vorgebbaren Zeitspanne erfassten und das Lichtobjekt (111, 113) abbildenden Bilder (320; 420; 920) bestimmt wird.

6. Verfahren gemäß einem der vorangegangenen Ansprüche, bei dem die Schritte des Bestimmens (651) und Kombinierens (653) fortlaufend durchgeführt werden, bis das Lichtobjekt (111, 113) klassifiziert ist.

7. Verfahren gemäß einem der vorangegangenen Ansprüche, bei dem im Schritt des Kombinierens (653) eine Korrelation zwischen dem Helligkeitsverlauf (1161; 1063) und dem charakteristischen Helligkeitsverlauf durchgeführt wird.

8. Vorrichtung zur Klassifizierung eines sich in einem Vorfeld eines Fahrzeugs (100) befindlichen Lichtobjekts (111, 113), die ausgebildet ist, um die Schritte eines Verfahrens gemäß einem der Ansprüche 1 bis 7 durchzuführen.

9. Computer-Programmprodukt mit Programmcode zur Durchführung des Verfahrens nach einem der Ansprüche 1 bis 7, wenn das Programm auf einer Vorrichtung ausgeführt wird.

## Claims

1. Method for classifying a light object (111, 113) situated in an area in front of a vehicle (100), wherein the method comprises the following steps:
determining (651) a brightness profile (1161; 1063), associated with the light object (111, 113), over at least two images (320; 420; 920) that image the light object at different times, wherein the brightness profile (1161; 1063) corresponds to a percentage difference of the brightness values of the images (320; 420; 920), and normalizing the brightness profile (1161; 1063) with a distance scale, wherein associated with the brightness profile (1161; 1063) is a path distance that is travelled by the vehicle (100) during the recording of the images (320; 420; 920) on which the brightness profile (1161; 1063) is based; combining (653) the brightness profile with a brightness profile that is characteristic of a reflective light object (111, 113) in order to classify the light object as a reflective or a self-luminous light object.

2. Method according to Claim 1, having a step of selecting the characteristic brightness profile in dependence on a current illumination characteristic of a headlamp (102) of the vehicle which lights the area in front of the vehicle (100).

3. Method according to one of the preceding claims, in which, in the determining step, a first brightness of the light object (111, 113) is determined in a first image (320) which images the light object, and at least one second brightness of the light object is determined in at least one second image (420) which images the light object, and the brightness profile is determined from the first brightness and the at least one second brightness.

4. Method according to Claim 3, in which, in the determining step, the brightness profile (1161; 1063) is determined as a change between the first brightness and the at least one second brightness.

5. Method according to one of the preceding claims, in which, in the determining step, the brightness profile is determined over a number of images (320; 420; 920) which are captured within a specifiable time period and which image the light object (111, 113).

6. Method according to one of the preceding claims, in which the determining step (651) and the combining step (653) are performed continuously until the light object (111, 113) is classified.

7. Method according to one of the preceding claims, in which, in the combining (653) step, a correlation is established between the brightness profile (1161; 1063) and the characteristic brightness profile.

8. Apparatus for classifying a light object (111, 113) situated in an area in front of a vehicle (100), which apparatus is embodied to perform the steps of a method according to one of Claims 1 to 7.

9. Computer program product with program code for performing the method according to one of Claims 1 to 7 upon execution of the program on an apparatus.

## Revendications

1. Procédé pour classer un objet lumineux (111, 113) situé dans une aire d'évolution d'un véhicule (100), dans lequel le procédé comprend les étapes suivantes :
déterminer (651) une courbe de luminosité (1161 ; 1063) associée à l'objet lumineux (111, 113) par l'intermédiaire d'au moins deux images (320 ; 420 ; 920) représentant l'objet lumineux à des moments différents, dans lequel la courbe de luminosité (1161 ; 1063) correspond à un pourcentage de différence entre les valeurs de luminosité des images (320 ; 420) ; 920) et la normaliser la courbe de luminosité (1161 ; 1063) avec une échelle de trajet, dans lequel un trajet que le véhicule (100) a couvert pendant l'enregistrement des images (320 ; 420 ; 920) sur lesquelles est basée la courbe de luminosité (1161 ; 1063) est associé à la courbe de luminosité (1161 ; 1063) ;
combiner (653) la courbe de luminosité avec une courbe de luminosité caractéristique d'un objet lumineux réfléchissant (111, 113) pour classer l'objet lumineux en objet lumineux réfléchissant ou auto-éclairant.

2. Procédé selon la revendication 1, comprenant une étape consistant à sélectionner la courbe caractéristique de luminosité en fonction d'une caractéristique d'éclairage actuelle d'un projecteur (102) du véhicule éclairant l'aire d'évolution du véhicule (100).

3. Procédé selon l'une des revendications précédentes, dans lequel, lors de l'étape de détermination, une première luminosité de l'objet lumineux (111, 113) dans une première image (320) représentant l'objet lumineux et au moins une deuxième luminosité de l'objet lumineux dans au moins une deuxième image (420) représentant l'objet lumineux sont déterminées et la courbe de luminosité est déterminée à partir de la première luminosité et de l'au moins une deuxième luminosité.

4. Procédé selon la revendication 3, dans lequel, lors de l'étape de détermination, la courbe de luminosité (1161 ; 1063) est déterminée comme étant une variation entre la première luminosité et l'au moins une seconde luminosité.

5. Procédé selon l'une des revendications précédentes, dans lequel, lors de l'étape de détermination, la courbe de luminosité est déterminée sur un certain nombre d'images (320 ; 420 ; 920) détectées au cours d'un intervalle de temps définissable et représentant l'objet lumineux (111, 113).

6. Procédé selon l'une des revendications précédentes, dans lequel les étapes de détermination (651) et de combinaison (653) sont effectuées en continu jusqu'à ce que l'objet lumineux (111, 113) soit classé.

7. Procédé selon l'une des revendications précédentes, dans lequel, lors de l'étape de combinaison (653), une corrélation entre la courbe de luminosité (1161 ; 1063) et la courbe de luminosité caractéristique est effectuée.

8. Dispositif pour classer un objet léger (111, 113) situé dans une aire d'évolution d'un véhicule (100), conçu pour exécuter les étapes d'un procédé selon l'une des revendications 1 à 7.

9. Produit de programme d'ordinateur comportant un code de programme destiné à la mise en oeuvre du procédé selon l'une des revendications 1 à 7 lorsque le programme est exécuté sur un dispositif.
